(19) **Europäisches Patentamt**
**European Patent Office**
**Office européen des brevets**

(11) **EP 1 675 274 B1**

(12) **EUROPÄISCHE PATENTSCHRIFT**

(45) Veröffentlichungstag und Bekanntmachung des Hinweises auf die Patenterteilung:
**10.02.2010 Patentblatt 2010/06**

(51) Int Cl.:
**H04B 3/54** *(2006.01)*

(21) Anmeldenummer: **05028253.2**

(22) Anmeldetag: **22.12.2005**

(54) **Verfahren zur Datenübertragung in einem Wechselspannungsnetz**

Data transmission method over an AC power line

Procédé de transmission de données sur une ligne de puissance à courant alternatif

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **22.12.2004 DE 102004061659**

(43) Veröffentlichungstag der Anmeldung:
**28.06.2006 Patentblatt 2006/26**

(73) Patentinhaber: **Beck, Wilfried**
**65191 Wiesbaden (DE)**

(72) Erfinder:
• **Beck, Wilfried**
**65191 Wiesbaden (DE)**

• **Hofmann, Ralph**
**35683 Dillenburg (DE)**

(74) Vertreter: **Aue, Hans-Peter**
**Patentanwälte**
**Becker & Aue**
**Gaustrasse 20**
**55411 Bingen (DE)**

(56) Entgegenhaltungen:
**EP-A- 1 134 910     DE-A1- 4 238 892**
**US-A- 4 300 126     US-A- 5 264 823**
**US-B1- 6 359 422**

**Beschreibung**

**Gebiet der Erfindung**

Die Erfindung bezieht sich auf ein Verfahren zur Datenübertragung durch einen Modulator in einem Wechselspannungsnetz mit mehreren angeschlossenen Verbrauchern, sowie eine Vorrichtung hierfür.

**Hintergrund der Erfindung**

Entsprechend dem Impedanzcharakter eines elektrischen Verbrauchers werden bei Wechselstrom die Wirkleistung bzw. der Wirkstrom, die vom Verbraucher restlos in eine andere Energie umgewandelt und nach außen abgegeben wird, die Blindleistung bzw. der Blindstrom, die nur während einer Viertelperiode gespeichert und in der nächsten wieder als elektrische Energie an das Stromnetz zurückgeliefert wird, und die Scheinleistung bzw. der Scheinstrom, die sich aus beiden zusammensetzt, unterschieden.

In der Wechselstromtechnik wird eine Wechselspannung beschrieben als eine Spannung, deren Momentanwert zeitlich prinzipiell nach dem Verlauf einer Sinuskurve variiert:

$$(1) \quad U(t) = \hat{U}*\sin(2*\pi*f*t)$$

U(t)   Momentwert der Spannung
Û       Spitzenwert der Spannung
n       3,141592654...
f       Nennfrequenz der Wechselspannung
t       Zeit in Sekunden
sin     mathematische Sinusfunktion mit dem Winkel im Bogenmaß geeicht.

Wird eine solche Spannung zur Energieversorgung von elektrischen Verbrauchern eingesetzt, werden diese grundsätzlich in zwei Gruppen eingeteilt:

    a) ohmsche Verbraucher (so genannte Wirklasten)
    b) induktive oder kapazitive Verbraucher (so genannte Blindlasten).

Die ohmschen Verbraucher zeichnen sich dadurch aus, dass der von ihnen aufgenommene Momentanwert des Stromes I(t) stets der Proportionalitätsgleichung entspricht:

$$(2) \quad I(t) = \hat{U}*\sin(2*\pi*f*t)/R = U(t)/R$$

I(t)   Momentanwert des am Verbraucher aufgenommenen Stromes
Û       Spitzenwert der Spannung
n       3, 141592654...
f       Nennfrequenz der Wechselspannung
t       Zeit in Sekunden
sin     mathematische Sinusfunktion mit dem Winkel im Bogenmaß geeicht
R       Ohmscher Widerstand des Verbrauchers.

Die induktiven oder kapazitiven Verbraucher zeichnen sich dadurch aus, dass zur Beschreibung des Stromverlaufes in der Gleichung (2) ein Korrekturwert eingefügt werden muss:

$$(3) \quad I(t) = \hat{U}*\sin(2*\pi*f*t+\varphi)/X$$

I(t)   Momentanwert des vom Verbraucher aufgenommenen Stromes
Û       Spitzenwert der Spannung

n    3,141592654...

f    Nennfrequenz der Wechselspannung

t    Zeit in Sekunden

sin    mathematische Sinusfunktion mit dem Winkel im Bogenmaß geeicht

$\varphi$    Phasenwinkel

X    Blindwiderstand des Verbrauchers (tritt an die Stelle des ohmschen Widerstandes in Gleichung (2)).

Dieser Strom wird als Blindstrom bezeichnet.

Der so genannte Phasenwinkel $\varphi$ beträgt dabei für kapazitive Lasten n/2 und für induktive Lasten - n/2. Der Blindwiderstand X ist ein virtueller Widerstand, der keine konstante Größe ist, sondern - im Gegensatz zum ohmschen Widerstand R - von der Nennfrequenz f abhängt. Er ist eine Rechengröße, der in der Theorie der Wechselstromtechnik eine zentrale Bedeutung zukommt.

In der Praxis kommen häufig beide Lastformen als Kombination vor.

Der Momentanwert des Stromes kann durch die Gleichung beschrieben werden:

$$(4) \quad I(t) = \hat{U} * \sin(2 * \pi * f * t + \varphi) / Z$$

wobei der Phasenwinkel $\varphi$ jetzt beliebige Werte annehmen kann.

I(t)    Momentanwert des am Verbraucher aufgenommenen Stromes

$\hat{U}$    Spitzenwert der Spannung

n    3,141592654...

f    Nennfrequenz der Wechselspannung

t    Zeit in Sekunden

sin    mathematische Sinusfunktion mit dem Winkel im Bogenmaß geeicht

$\varphi$    Phasenwinkel

Z    Scheinwiderstand des Verbrauchers (tritt an die Stelle des ohmschen Widerstandes in Gleichung (2) bzw. Scheinwiderstandes in Gleichung (3)).

Dieser so genannte Scheinstrom stellt eine Kombination aus Wirk- und Blindstrom dar. Die jeweiligen Anteile von Wirk- und Blindstrom am Scheinstrom können rechnerisch bestimmt werden. Daher ist grundsätzlich im Scheinstrom ein Wirkstrom und ein Blindstrom enthalten. Der Scheinwiderstand ist ebenfalls eine wichtige Rechengröße in der Theorie der Wechselstromtechnik.

Sind mehrere ohmsche, induktive, kapazitive oder daraus kombinierte Verbraucher an ein Wechselstromversorgungsnetz angeschlossen, können diese in ihrer Gesamtwirkung auf die Spannungsversorgung und im Rahmen des erfindungsgemäßen Verfahrens als ein Verbraucher zusammengefasst werden, dessen Stromaufnahme durch die Gleichung (4) mit geeigneten Werten für Z und $\varphi$ gegeben ist.

Es gilt, dass immer dann, wenn der Phasenwinkel $\varphi$ ungleich Null ist, im Nulldurchgang der Spannung ein von Null abweichender Strom durch den Verbraucher fließt.

Aus der DE 42 38 892 ist eine Blindstromkompensation mit Hilfe einer Hilfsspannungsquelle bekannt, wobei ihre Offenbarung jedoch nicht auf das Fachgebiet der Datenübertragung ausgerichtet ist.

Aus der US 5,491,463 A ist ein System zur individuellen Ansteuerung von Verbrauchern bekannt, wobei die Adress- und Steuerdaten während der Nulldurchgänge der Versorgungs-Wechselspannung übertragen werden. Dabei werden als Bit-Signale Bursts mit einer Frequenz von 120 kHz während der Nulldurchgänge der Wechselspannung übertragen. Diese 120 kHz-Signale werden von den Empfängern, die den einzelnen Verbrauchern zugeordnet sind, erfasst und in entsprechende Bits umgesetzt, um die jeweiligen Adressen und die jeweiligen Steuerinformationen zu detektieren bzw. zu decodieren.

Nachteilig hierbei ist, dass ein eigener 120 kHz-Generator erforderlich ist, um die Burst-Signale zu erzeugen. Darüber hinaus müssen die Empfänger mit entsprechende Zähler enthaltenden Detektor-Schaltungen ausgerüstet sein. Ein weiterer Nachteil besteht darin, dass z.B. für die Übertragung dieser Signale bestimmte Eigenschaften des Leitungsnetzes im Hochfrequenz-Bereich erforderlich sind, die nicht definiert bzw. praktisch kaum definierbar sind und somit auf Betreiberseite nicht garantiert werden können. Das System kann daher schwer vorhersagbaren Einschränkungen und Wechselwirkungen unterliegen.

Weiterhin ist aus der EP 1 134 910 A2 ein System für eine Nulldurchgangs-Datenübertragung für Versorgungsleitungen mit an eine Stromschiene angeschlossenen Verbrauchern, insbesondere Leuchten, bekannt. Dieses System enthält ein gemeinsames Steuerteil mit einer Eingabeeinheit, einen Speicher und einen Steuersender sowie den Verbrauchern zugeordnete Empfänger, die einen Speicher für ihnen zugehörige Adressen haben und Leistungsschalter in Verbindungsleitungen zu den Verbrauchern entsprechend den vom Steuersender empfangenen Steuersignalen ansteuern. Dabei werden vom Steuersender als Steuersignale Daten-Bits über die Wechselspannung zur Zeit der Nulldurchgänge der Wechselspannung übertragen, indem der Steuersender einen in der Versorgungsleitung zu den Verbrauchern vorgesehenen Schalter ansteuert, um bei Nulldurchgängen der Netzspannung den Stromfluss kurzzeitig zu unterbrechen wobei unterschiedliche Unterbrechungs-Zeitdauern für verschiedene Bits vorgesehen sind. Bei diesem Datenübertragungsverfahren ist es technisch möglich, Informationen an mehrere, an eine gemeinsame Wechselspannungsversorgung angeschlossene Verbraucher zu übertragen, indem um den Nulldurchgang der Spannung eine Stromflussunterbrechung erfolgt, die bei ohmschen Verbrauchern von den Empfängern als Ausbleiben der Spannung erkennbar ist.

Somit wird ausschließlich bei Nulldurchgängen des Spannungsverlaufs der Stromfluss unterbrochen, mit dem Ziel, die Spannung, abweichend von Gleichung (1), in diesen Zeiten auf Null zu schalten. Systembedingt dürfen die Verbraucher hierbei jedoch keine induktiven oder kapazitiven Lastanteile besitzen, da diese die Spannungsaustastung im Nulldurchgang der Spannungskurve stören würden. Daher müssen die Verbraucher bei diesem System nur rein ohmsches Verhalten, das nur durch die Gleichung (2) beschrieben ist bzw. einen Phasenwinkel $\varphi$ von Null bzw. annähernd Null, aufweisen, da andernfalls die um den Nulldurchgang der Spannung vorgenommene Austastung durch den vom Verbraucher eingeprägten Blindstrom überdeckt würde. Dieses System funktioniert dadurch nicht in einer Wohnung oder einem Gebäude, da hier regelmäßig Blindlasten und andere nicht-ohmsche Verbraucher an die Wechselstrom-Energieversorgungsleitung angeschlossen sind, die die beabsichtigte Form der Datenübertragung stören würden.

Die DE 10 2004 047 082.0 betrifft ein Verfahren zur Datenübertragung für Wechselspannungsnetze durch Modulation der Wirkleistung bei einem oder mehreren Verbrauchern, nämlich durch gezielt variierte Wirkleistung, wobei zur Übermittlung der Dateninformationen Variationen des Momentanwertes der Wirkleistung auf ein beliebiges Maß durch Vergrößerung bzw. Verkleinerung durchgeführt werden, die von einer Einheit als Sender oder Modulator in die Wechselstrom-Energieversorgungsleitung eingeprägt werden und von einer weiteren Einheit als Empfänger oder Demodulator ausgewertet werden.

Dieses Verfahren erzwingt durch eine temporär von der Sinusform der Netzspannung abweichende Spannung eine momentane Änderung der Wirkleistung in den angeschlossenen Verbrauchern. Dies erfordert einen im Vergleich zu EP 1 134 910 A2 erheblichen technischen Aufwand im Modulator.

Wird die Wirkleistungsumtastung durch den Modulator in den Phasenlagen der Sinusspannung vorgenommen, in denen die Wirkleistung der angeschlossenen Verbraucher im Verhältnis zu deren Nennleistung gering ist, sowie die Umtastung immer als eine Verringerung der Wirkleistung ausgeführt, so fallen die Umtastungen in der Regel in eine Phasenlage, in der die eventuell vorhandenen Blindströme gerade einen hohen Momentanwert besitzen und die Umtastungen daher leicht überdecken können. Diese Wirkleistungseinprägung kann darüber hinaus auf längeren widerstandsbehafteten Spannungsleitungen durch daran angeschlossene Verbraucher mit Blindstromanteilen verfälscht werden.

## Aufgabe der Erfindung

Es ist daher Aufgabe der Erfindung, ein Verfahren der eingangs genannten Art zu schaffen, mit dem neben ohmschen auch induktive oder kapazitive Verbraucher oder Kombinationen daraus an Energieversorgungsleitungen eines Wechselstromnetzes innerhalb einer Wohnung, eines Gebäudes, einer Gebäudegruppe usw. betrieben werden können und dabei ermöglicht wird, den Modulator technisch erheblich einfacher zu gestalten, gegebenenfalls sogar als einfachen Schalter, wie in EP 1 134 910 A2 beschrieben.

## Beschreibung der Erfindung

Der Erfindung liegt die Erkenntnis zu Grunde, dass eine Datenübertragung in einem Wechselspannungsnetz, in das sowohl Verbraucher mit ohmschen als auch Verbraucher mit induktiven oder kapazitiven Verhalten angeschlossen sind, während des Schaltens durch Stromflussunterbrechung, wie in EP 1 134 910 A2 beschrieben, in den Nulldurchgängen der Versorgungs-Wechselspannung infolge der Blindstromanteile nicht störungsfrei möglich ist.

Erfindungsgemäß wird die Aufgabe dadurch gelöst, dass während der durch einen Schalter bewirkten Stromflussunterbrechungen durch einen Sender auf der Verbraucherseite mindestens so viel Blindstrom durch eine elektrische oder elektronische Schaltung, wobei die Schaltung einen elektrischen niederohmigen Widerstand umfasst, der derart gesteuert wird, dass dieser nur zu Zeitpunkten, in denen der Modulator eine Verringerung der Wirkleistung als Datensignal in die Wechselspannungsnetz einprägt, einen Stromfluss einprägt, der die von Blindlasten getriebenen Blindströme ableiten soll, so weit aufgefangen wird, dass angeschlossene Empfangseinheiten beim Auslesen der übermittelten Informationen von den Blindströmen nicht in ihrer Funktion beeinträchtigt werden.

Die Vorrichtung zur Datenübertragung für Wechselspannungsnetze, umfasst:

ein Wechselspannungsnetz, mit einem Schalter zum Schalten einer Stromflussunterbrechung, mit am Wechselspannungsnetz angeschlossenen:

mindestens einen Modulator, der Variationen des Momentanwertes der Wirkleistung bereitstellt, und mindestens einen Terminator in Gestalt eines, durch Schaltelement zuschaltbaren, niederohmigen Ballastverbrauchers. Diese Vorrichtung ist dadurch gekennzeichnet, dass der Terminator ein elektrischer, niederohmiger Ballastverbraucher ist, und durch ein Ansteuerelement derart gesteuert wird, dass der Terminator nur zu Zeitpunkten, in denen der Modulator eine Verringerung der Wirkleistung als Datensignal in das Wechselspannungsnetz einprägt oder einprägen könnte, stromführend wird, so dass eine so große Menge von Bildlasten aufgefangen wird, dass angeschlossene Empfangseinheiten beim Auslesen der übermittelten Informationen von den Blindströmen nicht in ihrer Funktion beeinträchtigt werden.

Der Terminator kann darüber hinaus auch einen elektrischer, niederohmigen Ballastverbraucher umfassen, der durch ein Ansteuerelement derart gesteuert wird, dass der Terminator nur zu Zeitpunkten, in denen der Modulator eine Verringerung der Wirkleistung als Datensignal in die Energieversorgungsleitung einprägt oder einprägen könnte, stromführend wird.

Dieser Terminator kann durch ein Verfahren, zur Datenübertragung durch Modulation in einem Wechselspannungsnetz mit mehreren angeschlossenen Verbrauchern betrieben werden, wobei während der Stromflussunterbrechungen durch einen Sender der auf der Verbraucherseite fließende Blindstrom weitestgehend von einer speziellen elektrischen oder elektronischen Schaltung aufgefangen wird.

Bei diesem Verfahren können darüber hinaus die Blindstromanteile in der Energieversorgungsleitung durch gezielt gesteuerte Strombelastung abgeleitet werden, bevor die Blindstromanteile eine zu lange Strecke über die Energieversorgungsleitung zurücklegen.

Weitestgehend aufgefangen bedeutet hierbei, daß mindestens so viel Blindstrom aufgefangen wird, dass angeschlossene Empfangseinheiten beim Auslesen der übermittelten Informationen von den Blindströmen nicht in ihrer Funktion beeinträchtigt werden.

Definiert wird die Erfindung somit durch die Merkmale der unabhängigen Ansprüche.

Weiterhin ist vorgesehen, dass die Blindstromanteile in der Energieversorgungsleitung durch gezielt gesteuerte Strombelastung abgeleitet werden, bevor die Blindstromanteile eine zu lange Strecke über die Energieversorgungsleitung zurücklegen.

Durch die Erfindung können neben ohmschen auch induktive oder kapazitive Verbraucher oder Kombinationen daraus am Netzstrang innerhalb einer Wohnung, eines Gebäudes, einer Gebäudegruppe usw. betrieben werden, ohne die Datenübertragung zu stören.

Ferner liegt der Erfindung die Erkenntnis zugrunde, dass bei leistungsfähigeren Verfahren mit beliebiger Wirkleistungsumtastung diese durch ungünstiges Zusammentreffen von Blindlasten und Leitungswiderständen, z.B. lange oder dünne Zuleitung zu Verbrauchern, verfälscht werden kann, was ggf. zum Erliegen der Kommunikation führen kann.

Hierbei kann das beschriebene Verfahren eingesetzt werden, um den Einfluss der genannten Störgrößen zu verringern und so auch unter ungünstigen Bedingungen die Kommunikation zwischen Sender und Empfänger weiterhin zu gewährleisten.

Die Erfindung dient somit grundsätzlich dazu, die Energieversorgungsleitung, über welche der Datentransfer erfolgen soll, von den unerwünschten Einflüssen nichtohmscher Verbraucher auf die Übertragbarkeit von Daten auf den Leitungen freizuhalten, so dass die auf der Leitung befindlichen Datensignale beim Transport auf der Energieversorgungsleitung nicht verfälscht werden. Daher soll die dies ermöglichende Schaltvorrichtung und das damit bereitgestellte Verfahrensmerkmal in Anlehnung an den an sich bekannten reellen oder komplexen Abschluss einer Hochfrequenzleitung in der weiteren Beschreibung als "Terminator" bzw. "Termination" bezeichnet werden. Dem entgegengesetzt versteht ein Fachmann aus dem hier nicht relevanten Fachgebiet der Wellenleitung den Begriff der Terminierung als "reellwertigen Impedanzabschluss einer Dipolleitung".

Hierzu ist vorgesehen, dass der während der Wirkleistungsumtastung fließende Blindstrom derart belastet wird, dass dieser keine störend höhere als die durch den Modulator eingeprägte Wirkleistung in den angeschlossenen Verbrauchern erzeugt.

Gleichzeitig darf der Terminator aber auch keine besonders hohe eigene Wirkleistung erzeugen, insbesondere wenn beispielsweise der Modulator in der entsprechenden Phase keine Umtastung vornimmt, da eine solche hohe eigene Wirkleistung Probleme bei der Handhabung aufwerfen könnte. Z.B. könnte eine Kühlung des Terminators infolge der Wärmeentwicklung notwendig werden. Eine hohe Wirkleistung des Terminators würde darüber hinaus die Energieeffizienz des Systems beinträchtigen. Beim Betrieb dieses erfindungsgemäßen Verfahrens ist jedoch in der Praxis keine besondere Kühlung des Terminators erforderlich, da die vom Terminator umgesetzte Wirkleistung durch geeignete Schaltungstechnik entsprechend klein gehalten wird.

Ferner kann durch den Einsatz eines solchen Terminators in Systemen, die Daten mittels Wirkleistungsumtastung übertragen, in schwierigen Fällen, wie beispielsweise ungünstigen Betriebsbedingungen, wie insbesondere sehr hohen Blindlasten oder hohen Leitungswiderständen, bzw. sehr langen Leitungen, eine höhere Betriebssicherheit erzielt werden, indem der Terminator in der netztopologischen Nähe von solch störenden Blindlasten angeschlossen wird, so dass deren Blindstromanteil kompensiert werden kann.

Der Terminator ist hier ausgeführt als ein elektrischer, niederohmiger Widerstand, der derart gesteuert wird, dass dieser nur zu Zeitpunkten, in denen der Modulator eine Verringerung der Wirkleistung als Datensignal in die Energieversorgungsleitung einprägt oder einprägen könnte, stromführend wird, der die von Blindlasten getriebenen Blindströme ableiten soll.

Der Momentanwert der Wirkleistung eines ohmschen Verbrauchers an einer sinusförmigen Wechselspannung folgt der Gleichung

$$(5) \quad P(t) = (\hat{U}^2/R) * sin^2(2*\pi*f*t)$$

mit $sin^2(x): = sin(x)*sin(x) = \frac{1}{2}*(1+sin(2x))\cdot$

P(t) Momentanwert der Wirkleistung
Û Spitzenwert der Spannung
π 3,141592654...
f Nennfrequenz der Wechselspannung
t Zeit in Sekunden

Vorzugsweise erfolgt die Wirkleistungsumtastung im Bereich minimaler Momentanwerte der Wirkleistung eines Verbrauchers.

Eine optimale Auslegung der Erfindung hinsichtlich der Energieeffizienz erfordert somit, die Wirkleistungsumtastung in den Bereich der Minimalwerte von P(t) gemäß Gleichung (5) zu legen.

Dies wird durch die Erfindung vorteilhaft verwirklicht.

Der Terminator kann als ein sehr niederohmiger Ballastverbraucher ausgelegt werden, der in den entsprechenden Phasen des Momentanwertes der Wirkleistung P(t) als Verbraucher dem Spannungsnetz zugeschaltet wird und durch seinen hohen Eigenverbrauch zu diesem Zeitpunkt die Energie, die an die Energieversorgungsleitung angeschlossene Blindlasten in den gleichfalls angeschlossenen Wirkleistungsverbrauchern erzeugen würden, selbst verbraucht. Damit wird erreicht, dass die vom Modulator vorgenommene Verringerung der Wirkleistung auf dem Stromnetz erkennbar bleibt, auch wenn gleichzeitig hohe Momentanwerte des Blindstromes vorliegen.

Durch das Zuschalten des Ballastverbrauchers Terminator nur während der Phasen, in denen die Wirkleistung nach Gleichung (5) sehr geringe Werte aufweist, bleibt der durchschnittliche Energieverbrauch des Terminators vernachlässigbar gering. In praktisch realisierbaren Systemen kann durchaus ein Verhältnis von 1:1.000 zwischen neutralisierter Blindleistung und der vom Terminator dabei aufgenommenen Wirkleistung erreicht werden.

Spezielle Ausführungsbeispiele werden durch die Figuren beschrieben. Hierbei beschreibt

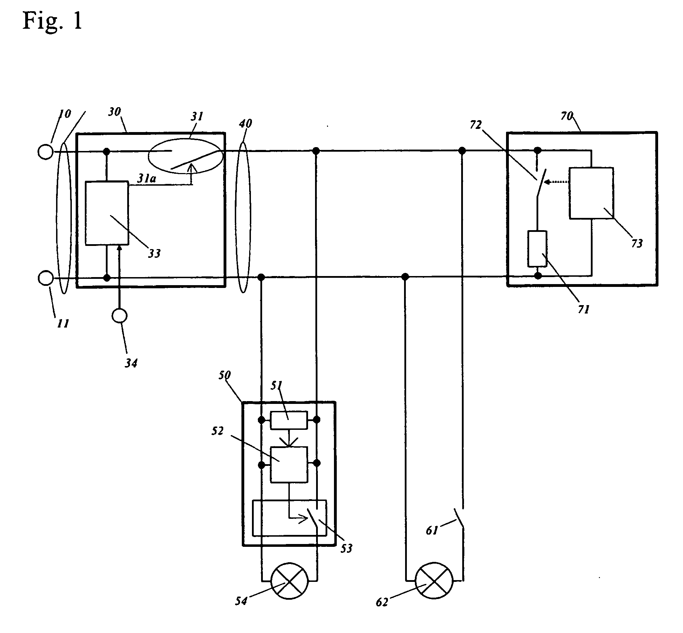

Fig.1 ein Blockschaltbild eines anspruchsgemäßen Systems

Fig.1 zeigt einen beispielhaften Aufbau eines anspruchsgemäßen Systems, wobei eine Sendeeinheit (Modulator 30) und verschiedene Arten von Empfangseinheiten (Demodulatoren) und Verbrauchern dargestellt sind.

Hierbei stellen 10 und 11 die Einspeisepole eines Verbraucherstromkreises dar, wie es beispielsweise ein abgesicherter Stromkreis in einer Hausinstallation sein könnte.

In Fig. 1 ist ebenso eine beispielhafte Schaltung dargestellt, wie ein Modulator 30 aufgebaut werden kann, um Wirkleistungsvariationen durchführen zu können. Der Modulator 30 wird mit Hilfe der mindestens zweiadrigen Verbraucherzuleitung 40 mit den Verbrauchern 54, 62 verbunden, wobei mindestens ein Verbraucher 62 direkt mit den Verbraucherzuleitungen 40 verbunden sein kann und /oder mindestens ein Verbraucher 54 über eine weitere Schaltung der Empfangseinheit 50 mit der Verbraucherzuleitung 40 verbunden sein kann.

Der Modulator 30 besteht aus einem Umschalter 31, und einer Steuereinheit 33, die die beschriebene Modulation durch Wirkleistungsumtastungen zu den beabsichtigten Zeitpunkten der Sinuswelle der Netzwechselspannung auslöst.

Der Umschalter 31 wird hierbei günstigerweise als elektronischer Umschalter 31 wie beispielsweise eine Halbleiterschaltung ausgeführt, um schnell, präzise und verschleißfrei umschalten zu können.

Die Steuereinheit 33 kann beispielsweise aus einem Mikrocontroller und einer Schaltung zu dessen Stromversorgung bestehen, wie sie dem Fachmann bekannt sind, um die Wirkung zu erzeugen, wie oben beschrieben.

Die Steuereinheit 33 erfaßt den zeitlichen Kurvenverlauf der an den Einspeisepolen 10 und 11 eingespeisten Netzwechselspannung zum Beispiel mit einem Schwellertschalter und/oder einem mit der Netzwechselspannung synchronisierten Zeitgeber und steuert somit in den konstruktiv oder per Software festgelegten Phasenwinkeln der Sinuswelle den Umschalter 31 so an (vgl. Wirkungslinie 31a), daß die Verbindung zwischen der Verbraucherzuleitung 40 und der zuführenden Einspeiseleitung 20 unterbrochen wird.

Nach einer konstruktiv oder per Software festgelegten Zeit schaltet die Steuereinheit 33 die Verbraucherzuleitung 40 wieder auf die Einspeiseleitung 20.

Somit wird erreicht, daß zu einem beliebigen Zeitpunkt des Sinusverlaufs der Netzwechselspannung die Kontrolle der Verbraucherzuleitung 40 von den Einspeiseanschlüssen 10, 11 abgekoppelt werden kann. Durch Wahl einer kurzen, solchen Umtastdauer und einem geeigneten Abstimmen des Phasenwinkels, bei dem dies geschieht, kann die Störbeeinflussung von den an die Verbraucherzuleitung 40 angeschlossenen Verbrauchern 54, 62 minimiert werden, während hierdurch zugleich die Auslesbarkeit einer solchen Information maximiert werden kann.

Als hierfür günstige Werte haben sich Umtastungen mit Spannungssprüngen von ca. 20V bei einem Momentanwert der Sinusspannung zwischen 20V und 60V und mit einer Dauer von 10 bis 100 Mikrosekunden erwiesen, wobei der Fachmann auch größere bzw. kleinere Werte verwenden kann.

Dadurch wird das Signal einerseits auch bei hohen Blind- und Wirkstromanteilen auf der Verbraucherzuleitung 40 nicht verfälscht und andererseits verfälscht der Modulator 30 durch die kurzzeitige Umtastung mit einem bezogen auf die Nennspannung des Netzes geringen Spannungssprung nicht das Verhalten der an die Verbraucherzuleitung 40 angeschlossenen Verbraucher 54, 62, so daß beispielsweise eine Glühbirne als Verbraucher 54, 62 auch während einer Datenmodulation über mehrere oder viele Sinuswellen auf der Verbraucherzuleitung 40 keine erkennbaren Helligkeitsschwankungen zeigt. Dies bewirkt, dass erfindungsgemäß nun auch solche Verbraucher mit Informationen über ihre Verbraucherzuleitungen 40 versorgt werden können, die dafür bekannt sind, empfindlich auf Veränderungen ihrer Leistungsversorgung zu reagieren, oder dem Bediener durch eine solche Verhaltensänderung unmittelbar eine derartige Veränderung ihrer Leistungsversorgung anzeigen würden, wie es beispielsweise bei einer Glühbirne der Fall ist.

Ferner kann der Modulator 30 über eine oder mehrere Datenschnittstellen 34 verfügen, über die er Steuerinformationen von beispielsweise externen Steuersystemen, Datengeräten oder Sensoren erhalten kann, deren Informationsgehalt er nach einem konstruktiv oder per Software festgelegten, funktionalen Zusammenhang in eine Modulation auf die Verbraucherzuleitung 40 umsetzt.

Beispielhafte Datenschnittstellen könnten für die Übernahme von Daten aus einfachen Schaltern, aus Gateways, die eine Verbindung zu anderen Steuersystemen bereitstellen, aus Fernsteuersignalen per Funk oder Infrarot oder die Übernahme von Informationen aus EDV-Anlagen konstruiert werden, wie sie dem Fachmann zur Dateneinspeisung bekannt sind.

An die Verbraucherzuleitung 40 angeschlossen sind in Fig.1 ferner beispielhaft zwei Teilnehmer gezeigt: Empfangseinheit 50 und Schalter 61 mit den Verbrauchern 54, bzw. analog 62, unter anderem eine auf den empfangenen Daten beruhende Schalt- bzw. Steuerwirkung bereitzustellen.

Beispielhaft ist hierfür eine Empfangseinheit 50 gezeigt, die mit einem Stellglied 53 verbunden ist.

Teilnehmer 61 ist ein herkömmlicher Schalter, der eine an die Verbraucherzuleitung 40 als Verbraucher angeschlossene Glühbirne 62 schaltet.

Die Kombination von 61 und 62 symbolisiert einen beliebigen, konventionellen Verbraucher 54, der von dem System unbeeinflußt wie an einer normalen, d.h nicht modulierten Verbraucherzuleitung 40 betrieben werden kann.

Innerhalb der Empfangseinheit 50 ist ein Wirkleistungsverbraucher 51, mit der an der Verbraucherzuleitung 40 anliegenden Netzwechselspannung verbunden.

Eine Decodiereinheit 52 erfaßt den Momentanwert der in dem Wirkleistungsverbraucher 51 umgesetzten Wirkleistung und bewertet dessen zeitlichen Verlauf so, daß nach einer konstruktiv oder per Software festgelegten Funktion die durch die Modulation bedingten Abweichungen dieses Verlaufs von der normalen Sinusform der Netzwechselspannung erkannt werden.

Nach einem weiteren Verfahren Datenprotokoll (hierunter wird ein Protokoll verstanden, welches schrittweise die zu übermittelnden Informationen durch Modulation darstellbaren Zeichen zuordnet) filtert die Auswerteeinheit anschließend die für sie bestimmten Informationen aus und steuert in Abhängigkeit von deren festgelegter Bedeutung das Stellglied 53 an, das einen Verbraucher 54 wie beispielsweise eine Glühbirne oder einen anderen Verbraucher ein- und ausschalten kann, so daß dieser über die auf der Verbraucherzuleitung 40 durchgeführte Datenmodulation gezielt fernsteuerbar wird. Andere Beispiele solcher Stellglieder können auch Dimmer oder vergleichbar die Wirkung eines Verbrauchers beeinflussende Vorrichtungen sein. Auch andere Beeinflussungsvorrichtungen, die beispielsweise Lampen dimmen oder die Geschwindigkeit von beispielsweise Lüftermotoren oder andere Wirkungen elektrischer Verbraucher oder elektromechanischer Stellglieder beeinflussen, können somit erfindungsgemäß ferngesteuert werden, indem sie bzw. deren Stellglied entsprechend 53 über die Decodiereinheit 52 mit der Empfangseinheit 50 verbunden werden.

Die Erfassung des Momentanwertes der in dem Wirkleistungsverbraucher 51 freigesetzten Wirkleistung kann zum Beispiel durch eine analog arbeitende elektronische oder elektromechanische Meßvorrichtung erfolgen oder auch in einem leistungsfähigen Mikrocontroller durch Digitalisieren der Spannungswerte auf der Verbraucherzuleitung 40 und numerische Auswertung derselben, wobei im letzten Fall der Wirkleistungsverbraucher 51 nicht mehr physisch in der Schaltung vorhanden sein muß, sondern dessen physikalisches Verhalten in einem von der Decodiereinheit 52 beinhalteten Mikrocontroller numerisch nachgebildet werden kann.

Darüber hinaus zeigt Fig. 1 einen an die Zuleitung 40 angeschlossenen Terminator 70. Der Terminator 70 umfasst, in Parallelschaltung zueinander, und an die beiden Zuleitungen 40 angeschlossen, einmal mindestens ein Ansteuerelement 73, welches wie erwähnt parallel zu mindestens einem niederohmigen Ballastverbraucher 71 mit mindestens einem vorgeschalteten Schaltelement 72 ist.

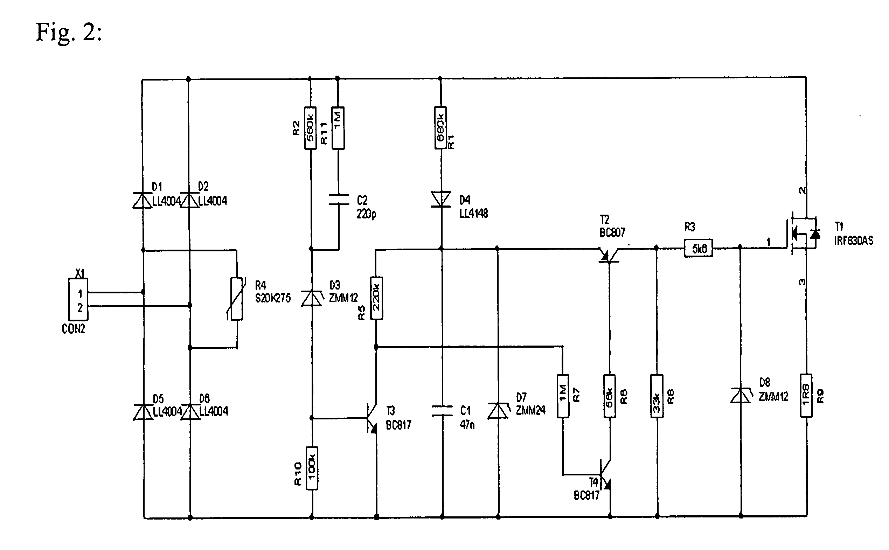

Beispielhaft ist in Fig. 2 eine Schaltung aufgeführt, welche den beanspruchten Merkmalen entspricht und mit welcher gute praktische Erfahrungen erzielt wurden:

Hierfür wurde auf folgende Bauteilwerte zurückgegriffen:

| | |
|---|---|
| C1: | 47nF |
| C2: | 220pF |
| D1: | LL4004 |
| D2: | LL4004 |
| D3: | ZMM12 |
| D4: | LL4148 |
| D5: | LL4004 |
| D6: | LL4004 |
| D7: | ZMM24 |
| D8: | ZMM12 |
| R1: | 680KΩ |
| R2: | 560KΩ |
| R3 : | 5KΩ |
| R4: | Epcos SIOV-S20K275 |
| R5: | 220KΩ |
| R6: | 56KΩ |
| R7: | 1MΩ |
| R8 : | 33KΩ |
| R9: | 1,8Ω |
| R10: | 100KΩ |
| R11 : | 1MΩ |
| T1: | IRF830AS |
| T2: | BC807 |
| T3: | BC817 |
| T4: | BC817 |

Funktionsweise der Schaltung bei hoher Spannung:

- Cl wird aufgeladen bis max. 24V (D7)
- T3 wird über R2/D3 durchgesteuert und schaltet T2/T4 ab.
- T1 wird über R3/R8 gesperrt

Funktionsweise der Schaltung bei geringer Spannung:

- T3 sperrt
- C1 ist aufgeladen und steuert über R5/R7 T4 und dieser über R6 P2 durch
- T2 steuert über R3 T1 durch und wirkt als Stromquelle
- Der von T2 getriebene Strom wird durch R10 und die Spannung von Cl bestimmt
- Die Spannung an Cl soll durch die Belastung von R8 gegen Ende des Abschnitts bereits unter 12V sinken, so daß der von T1 getriebene Strom bereits nachläßt wenn das Anschnittende naht
- Bei weiter steigender Spannung wird T3 dann wieder durchgesteuert und T1 zwangsweise gesperrt
- Da T1 nur durch die Ladung von C1 durchgesteuert werden kann, und C1 beim Ansteuern von T1 über R8 kontinuierlich Ladung abgibt, ist die Durchsteuerphase von T1 dadurch zeitlich begrenzt. Durch vom Fachmann situativ angepasste Dimensionierung kann dieses Timing so abgestimmt werden, daß im Normalfall der Laststrom sanft abnimmt und nicht abrupt abreißt

**EP 1 675 274 B1**

**Patentansprüche**

1. Verfahren zur Datenübertragung durch einen Modulator (30) in einem Wechselspannungsnetz mit mehreren angeschlossenen Verbrauchern (54, 62), **dadurch gekennzeichnet, dass** während der durch einen Schalter bewirkten Stromflussunterbrechungen durch einen Sender auf der Verbraucherseite mindestens so viel Blindstrom durch eine elektrische oder elektronische Schaltung (70), wobei die Schaltung (70) einen elektrischen niederohmigen Widerstand (71) umfaßt, der derart gesteuert wird, dass dieser nur zu Zeitpunkten, in denen der Modulator eine Verringerung der Wirkleistung als Datensignal in die Wechselspannungsnetz einprägt, einen Stromfluss einprägt, der die von Blindlasten getriebenen Blindströme ableiten soll, so weit aufgefangen wird, dass angeschlossene Empfangseinheiten beim Auslesen der übermittelten Informationen von den Blindströmen nicht in ihrer Funktion beeinträchtigt werden.

2. Verfahren nach Anspruch 1, **dadurch gekennzeichnet, dass** der niederohmige Widerstand (71) zur Kompensation der Blindlastanteile in der netztopologischen Nähe von solchen störenden Blindlasten angeschlossen wird, so daß deren Blindstromanteil kompensiert werden kann.

3. Verfahren nach Anspruch 1 oder 2, **dadurch gekennzeichnet, dass** der während einer Wirkleistungsumtastung fließende Blindstrom derart belastet wird, dass dieser keine schädlich höhere als die durch den Modulator (30) eingeprägte Wirkleistung in den angeschlossenen Verbrauchern (54, 62) erzeugt.

4. Verfahren nach mindestens einem der Ansprüche 1 bis 3, **dadurch gekennzeichnet, dass** die Wirkleistungsumtastung im Bereich minimaler Momentanwerte der Wirkleistung eines Verbrauchers (54, 62) erfolgt.

5. Vorrichtung zur Datenübertragung für Wechselspannungsnetze, umfassend:

   ein Wechselspannungsnetz (10, 11, 40), mit einem Schalter (31) zum Schalten einer Stromflussunterbrechung, mit am Wechselspannungsnetz (10, 11, 40) angeschlossenen:
   mindestens einen Modulator (30), der Variationen des Momentanwertes der Wirkleistung bereitstellt, mindestens eine Schaltung (70), in Gestalt eines,
   durch ein Schaltelement (72) zuschaltbaren, niederohmigen Ballastverbrauchers (71),

   **dadurch gekennzeichnet, daß** die Schaltung (70) ein elektrischer, niederohmiger Widerstand (71) ist, und durch ein Ansteuerelement (73) derart gesteuert wird, dass die Schaltung (70) nur zu Zeitpunkten, in denen der Modulator (30) eine Verringerung der Wirkleistung als Datensignal in das Wechselspannungsnetz einprägt oder einprägen könnte, stromführend wird, sodaß eine so große Menge von Blindlasten aufgefangen wird, dass angeschlossene Empfangseinheiten (50) beim Auslesen der übermittelten Informationen von den Blindströmen nicht in ihrer Funktion beeinträchtigt werden.

6. Vorrichtung zur Datenübertragung für Wechselspannungsnetze, nach Anspruch 5, **dadurch gekennzeichnet, dass** das Zuschalten des Widerstands (71) in der Schaltung (70) nur während der Phasen, in denen die Wirkleistung nach der Gleichung P(t) = (Ü$^2$/R)*sin$^2$(2*π*f*t) mit sin$^2$ (x): = sin(x)*sin(x) = ½*(1+sin(2x) geschieht, wobei
   P(t) = Momentanwert der Wirkleistung,
   Ü = Spitzenwert der Spannung,
   n = 3,141592654...,
   f = Nennfrequenz der Wechselspannung,
   t = Zeit in Sekunden
   sind.

7. Vorrichtung zur Datenübertragung für Wechselspannungsnetze, nach einem der Ansprüche 5 bis 6, **dadurch gekennzeichnet, daß** die von der Schaltung (70) umgesetzte Wirkleistung durch geeignete Schaltungstechnik entsprechend derart klein gehalten wird, daß keine besondere Kühlung des Terminators erforderlich ist.

8. Vorrichtung zur Datenübertragung für Wechselspannungsnetze, nach einem der Ansprüche 5 bis 7, **dadurch gekennzeichnet, daß** Umtastungen bei Spannungssprüngen von ca. 20V bei einem Momentanwert der Sinusspannung zwischen 20V und 60V und mit einer Dauer von 10 bis 100 Mikrosekunden erfolgen.

9. Vorrichtung zur Datenübertragung für Wechselspannungsnetze, nach einem der Ansprüche 5 bis 8, **dadurch gekennzeichnet, daß** Modulator (30) über eine oder mehrere Datenschnittstellen (34) verfügt.

**10.** Gebäudestromnetz umfassend eine Vorrichtung nach einem der Ansprüche 5 bis 9.

**Claims**

**1.** Method to transfer data by a modulator (30) within a AC-power supply network (10, 11, 40),

1.1 whereby said network has a plurality of electronic devices (54, 62) connected to it
**characterized in that**
1.2 while a switching device (31) causes an interrupt of the supplying current,

1.2.1 reactive current, is getting absorbed at least that much

1.2.1.1 that receiving units (50), also connected to said AC-power supply network (10, 11, 40) are not effected by said reactive current in their operation to read out said data transferred, whereby

1.3 said absorbtion is effected by a sender (70) connected on the consumer side,

1.3.1 said sender comprises an electric or electronic circuit (70)

1.3.1.1 whereby said electric or electronic circuit (70) comprises a low-resistance resistor (71),

1.3.1.1.1 and whereby said resistor (71) is operated in such a way that

1.3.1.1.1.1 said resistor (71) impresses an impact of current

1.3.1.1.1.1.1 precisely in those periods of time, in which said modulator (30) impresses a decrease of real power in order to provide said transfer of data via said AC-power supply network (10, 11, 40), whereby
1.3.1.1.1.1.2 said impact of current is capable to compensate reactive current, driven by said reactive loads.

**2.** Method according to claim 1, **characterized in that** the low resistance resistor (71), compensating the reactive current under respect of the topology of the circuit layout is connected that close to said disturbing reactive loads, that the reactive current of said ractive load will be compensated.

**3.** Method according to claim 1 or 2, **characterized in that** said reactive current, supplied during said real power shift keying, will be compensated that much, that said reactive current does not cause any real power higher than the one effected by said modulator in said current consumers (54, 62), connected.

**4.** Method according to claims 1 to 3, **characterized in that** said real power shift keying is effected during low instantaneous value of the real power of a current consumer (54, 62).

**5.** Device for transmitting data in an AC-power supply network, comprising:

5.1 an AC-power supply network (10, 11, 40) with a switch (31) capable to switch the break of a current supply,
5.2 whereby said AC-power supply network (10, 11, 49) is connected with:

5.2.1 at lest one modulator (30),

5.2.1.1 and whereby said modulator (30) provides a variation of the instantaneous value of the real power,

5.2.2 at least one circuit (70),

5.2.2.1 whereby said circuit (70) comprises at least one switch element (72),

5.2.2.1.1 capable to connect a low resistance load consumer (71) by connection of said switching element,

**characterized in that**
5.3 said circuit (70)

 5.3.1 consists of a electric, low-resistance resistor (71) and **in that**
 5.3.2 it is controlled by an actuating element (73) in such a way,

  5.3.2.1 that said circuit (70) is capable to supply current only in time periods, in which said modulator (30) impresses or could impress a decrease of the effective power as a data signal in said AC-power supply network (10, 11, 40),

   5.3.2.1.1 hereby providing the effect, that the amount of compensated reactive loads is that huge that the receiving units (50), connected to the AC-power supply network (10, 11, 40) are not effected in their function while reading out the data transmitted via said AC-power supply network.

6. Device for transmitting data in a AC-power supply network according to claim 5, **characterized in that** connecting said resistor (71) in said circuit (70) occurs only in the phases, in which the effective power follows the equation P (t) = (Û$^2$/R)*sin$^2$(2*π*f*t), with sin$^2$(x)=1/2*(1+sin(2x)), whereby is:

P(t) = instatnateous value of the erffective power
U = highest value of the voltage
π = 3, 141592645
f = rated frequency of the AC-Voltage
t = time in seconds

7. Device for transmitting data in an AC-power supply network according to claim 5, to 6 **characterized in that** the real power transformed by the circuit (70) is kept that low by respective circuit means of said circuit (70), that no additional cooling of said circuit (70) is necessary.

8. Device for transmitting data in an AC-power supply network according to claim 5, to 7 **characterized in that** within the range of 20V to 60V and within a duration between 10 and 100 microseconds said shift keyings occur in the case that the voltage-delta of about 20V

9. Device for transmitting data in an AC-power supply network according to one of the claims 5 to 8, **characterized in that** said modulator (30) comprises at least one data interface (34)

10. Power supply network comprising a device according to one of the claims 5 to 9.

**Revendications**

1. Procédé de transmission de données par un modulateur (30) dans un réseau à tension alternative auquel sont raccordés plusieurs consommateurs (54, 62), **caractérisé en ce que**, pendant les interruptions de flux de courant provoquées par un commutateur sous la commande d'un émetteur, il y a au moins une quantité suffisante de courant réactif interceptée sur le côté des consommateurs par un circuit électrique ou électronique (70) pour que le fonctionnement d'unités réceptrices raccordées ne soit pas perturbé par les courants réactifs lors de la lecture des informations transmises, le circuit (70) comprenant une résistance électrique de valeur ohmique faible (71) qui est commandée de manière à appliquer un flux de courant qui doit dissiper les courants réactifs transportés par des charges réactives uniquement à des moments où le modulateur applique une diminution de la puissance active en tant que signal de données dans le réseau à tension alternative.

2. Procédé selon la revendication 1, **caractérisé en ce que** la résistance de valeur ohmique faible (71) servant à compenser les composantes de charges réactives est branchée au voisinage de ce type de charges réactives parasites dans la topologie du réseau, de manière à ce que leur composante de charge réactive puisse être compensée.

3. Procédé selon la revendication 1 ou 2, **caractérisé en ce que** le courant réactif circulant pendant une modulation de la puissance active est chargé de manière à ce que ce courant ne génère pas dans les consommateurs raccordés (54, 62) une puissance active plus grande, et donc dommageable, que la puissance active injectée par le modulateur (30).

4. Procédé selon au moins une des revendications 1 à 3, **caractérisé en ce que** la modulation de la puissance active s'effectue dans le domaine des valeurs instantanées minimales de la puissance active d'un consommateur (54, 62).

5. Dispositif de transmission de données pour des réseaux à tension alternative, comprenant :

   un réseau à tension alternative (10, 11, 40) comprenant un commutateur (31) pour commuter une interruption de flux de courant,
   comprenant, raccordés au réseau à tension alternative (10, 11, 40) :

      au moins un modulateur (30) qui fournit des variations de la valeur instantanée de la puissance active,
      au moins un circuit (70) sous forme d'un consommateur de charge de valeur ohmique faible (71) pouvant être mis en circuit grâce à un élément de commutation (72),

   **caractérisé en ce que** le circuit (70) est une résistance électrique de valeur ohmique faible (71) et est commandé, grâce à un élément de commande (73), de manière à ce que le circuit (70) devienne passant uniquement à des moments où le modulateur (30) applique ou pourrait appliquer une diminution de la puissance active en tant que signal de données dans le réseau à tension alternative, de façon à ce qu'une quantité de charges réactives si grande soit interceptée que le fonctionnement d'unités réceptrices raccordées (50) ne soit pas perturbé par les courants réactifs lors de la lecture des informations transmises.

6. Dispositif de transmission de données pour des réseaux à tension alternative selon la revendication 5, **caractérisé en ce que** la mise en circuit de la résistance (71) dans le circuit (70) a lieu uniquement pendant les phases dans lesquelles la puissance active satisfait à l'équation

$$P(t) = (\hat{U}^2/R)*\sin^2(2*\pi*f*t)$$

avec $\sin^2(x) := \sin(x)*\sin(x) = \frac{1}{2}*(1+\sin(2x))$,
P(t) étant la valeur instantanée de la puissance active,
$\hat{U}$ la valeur de crête de la tension,
$\pi$ = 3,141592654...,
f étant la fréquence nominale de la tension alternative,
t étant le temps en secondes.

7. Dispositif de transmission de données pour des réseaux à tension alternative selon l'une des revendications 5 à 6, **caractérisé en ce que** la puissance active convertie par le circuit (70) est maintenue, grâce à une technique de circuit appropriée, à une valeur assez faible pour que la résistance terminale n'ait pas besoin d'un refroidissement particulier.

8. Dispositif de transmission de données pour des réseaux à tension alternative selon l'une des revendications 5 à 7, **caractérisé en ce que** des modulations ont lieu avec des sauts de tension d'environ 20 V pour une valeur instantanée de la tension sinusoïdale comprise entre 20 V et 60 V et sur une durée allant de 10 à 100 microsecondes.

9. Dispositif de transmission de données pour des réseaux à tension alternative selon l'une des revendications 5 à 8, **caractérisé en ce que** le modulateur (30) dispose d'une ou de plusieurs interfaces de données (34).

10. Réseau électrique de bâtiment comprenant un dispositif selon l'une des revendications 5 à 9.

## Fig. 1

Fig. 2:

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4238892
- US 5491463 A
- EP 1134910 A2
- DE 102004047082